# EUROPEAN PATENT APPLICATION

(11) **EP 3 518 322 A1**
(43) Date of publication of application: **31.07.2019**
(21) Application number: 16916786.3
(22) Date of filing: 23.09.2016
(51) Int. Cl.: H01M 2/36

(54) **PRODUCTION METHOD FOR FILM-CLAD BATTERY**

(71) Applicant: Nissan Motor Co., Ltd., Yokohama-shi, Kanagawa 221-0023 (JP)
(72) Inventor: MATSUMURA, Naonori, Atsugi-shi Kanagawa 243-0123 (JP); UEGAKI, Shunsuke, Atsugi-shi Kanagawa 243-0123 (JP)
(74) Representative: Global IP Europe Patentanwaltskanzlei
(86) International application number: PCT/JP2016/077933
(87) International publication number: WO 2018/055717

(57) **Abstract**

The present invention relates to a method for manufacturing a flat film-covered battery having a power-generating element formed by stacking a plurality of positive electrodes and negative electrodes with separators interposed therebetween that is housed together with an electrolytic solution in a flexible film-shaped exterior body. The manufacturing method comprises an injection step (S3) of filling the electrolytic solution into the film-shaped exterior body, which has the form of a bag with an open injection port and which houses the power-generating element; a sealing step (S4) of sealing the injection port after filling with the electrolytic solution; and a pumping step (S6) of successively carrying out pressurization and pressure release in which the power-generating element is subjected to pressurization and then pressure release from outside of the film-shaped exterior body along a thickness direction a plurality of times after sealing. The time required for the impregnation step (S7) of the electrolytic solution is reduced due to the pumping step.

## Description

### Technical Field

The present invention relates to a method for manufacturing a flat film-covered battery, wherein a power-generating element, together with an electrolytic solution, is housed in a flexible film-shaped exterior body.

### Background Art

For example, a flat film-covered battery is known from the prior art as a lithium-ion secondary battery, in which a power-generating element, which is obtained by stacking a plurality of positive electrodes and negative electrodes with separators interposed therebetween, is housed, together with an electrolytic solution, inside a flexible film-shaped exterior body. In this type of a film-covered battery, the power-generating element is housed within the film-shaped exterior body, which has the form of a bag with an injection port that remains open, and a liquid injection nozzle is inserted into the injection port for filling the interior of the film-shaped exterior body (also referred to as injection) with the electrolytic solution, for example, inside a decompression chamber, as disclosed in Patent Document 1.

Then, after injection, in an impregnation step, the injection port is sealed and left to stand for a prescribed period of time to allow the electrolytic solution to physically penetrate each part of the power-generating element.

Here, in the positive electrodes and the negative electrodes, an active material layer is provided on a surface of a metal foil, which serves as a current collector; however, since fine pores are present in the active material, it takes a long time for the electrolytic solution to penetrate into these pores. Accordingly, the impregnation step takes a long time, so that the production efficiency is low. This problem becomes more pronounced as the density of the power-generating element is increased in order to obtain a high-capacity battery.

Patent Document 1 discloses including a pressurization/decompression step, in which the film-shaped exterior body inside the decompression chamber is filled with the electrolytic solution, after which the pressure of the decompression chamber is increased to atmospheric pressure while the injection port remains open and is then reduced to again return to the decompressed state. However, the intent of this operation is to push the electrolytic solution from the periphery of the power-generating element, in which electrodes are stacked, to the central portion of each electrode: thus, there is further room for improvement in terms of causing the electrolytic solution to penetrate into the fine pores of the active material.

### Prior Art Documents

### Patent Documents

Patent Document 1: Japanese Laid-Open Patent Application No. 2013-140782

### Summary of the Invention

A method for manufacturing a film-covered battery according to the present invention comprises:
an injection step for filling a film-shaped exterior body, which has the form of a bag with an open injection port and which houses a power-generating element, with an electrolytic solution via the injection port;
a sealing step for sealing the injection port after filling with the electrolytic solution; and
a pumping step for successively carrying out pressurization and pressure release, in which the power-generating element is subjected to pressurization and then pressure release from outside of the film-shaped exterior body along the thickness direction a plurality of times after sealing.

When, during the pumping step described above, the power-generating element is pressurized along the thickness direction, an active material layer of a positive electrode and a negative electrodes in the power-generating element are pressed in the thickness direction, and the pores within the active material are crushed. Air remaining in the pores is expelled at this time. Then, as the pressure is released, the active material layer that is pressed in the thickness direction is released, and the crushed pores attempt to recover their shape. At this time, a negative pressure is generated in the pores, and the surrounding electrolytic solution is drawn therein. Accordingly, by successively carrying out pressurization and pressure release a plurality of times, penetration of the electrolytic solution into the active material proceeds rapidly, and it is possible to reduce the time required for impregnation.

### Brief Description of the Drawings

[Figure 1] is a process explanatory view illustrating the main parts of a manufacturing method according to an embodiment.
[Figure 2] is a perspective view of a pressurization magazine equipped with a screw-type pressurization mechanism.
[Figure 3] is a cross-sectional view of a portion of the pressurization magazine illustrating a state in which a cell is loaded.
[Figure 4] is an explanatory view of a pumping stage.
[Figure 5] is a characteristic diagram illustrating a pressure change profile in a pumping step.
[Figure 6] is a characteristic diagram illustrating the time required for impregnation compared with a comparative example.
[Figure 7] is a characteristic diagram illustrating a relationship between maximum pressure and time elapsed from the end of injection to the pumping step.
[Figure 8] is a side view of a pressurization magazine equipped with a fluid bag-type pressurization mechanism.
[Figure 9] is an explanatory view of an operation of a pressurization magazine in which an air bag is divided into three sections in a modified example.

### Embodiments for Implementing the Invention

An embodiment of the present invention will be described in detail below based on the drawings.

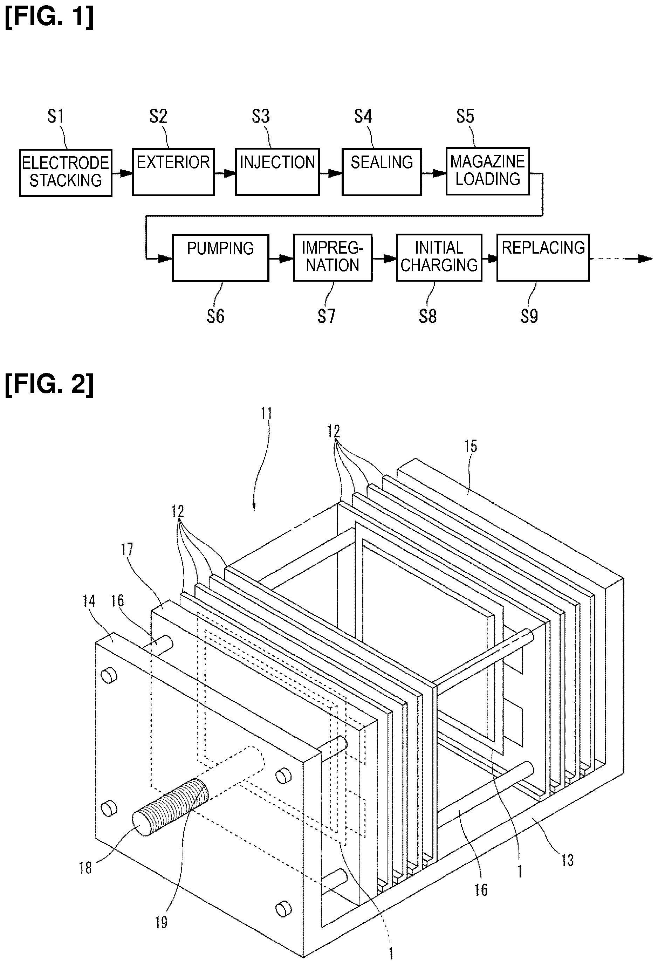

Figure 1 is a process explanatory view illustrating the main parts of a battery manufacturing method according to an embodiment. In this embodiment, a flat film-covered lithium-ion secondary battery that constitutes a power supply pack for driving a vehicle, such as an electric vehicle or a hybrid vehicle, is used as an example of the film-covered battery. The film-covered battery according to the embodiment basically has the same configuration as batteries disclosed in Patent Document 1 (Japanese Laid-Open Patent Application No. 2013-140782), Japanese Laid-Open Patent Application No. 2015-47047, and the like, and is obtained by stacking a plurality of positive electrodes and negative electrodes, formed into rectangular sheets, with separators interposed therebetween to constitute a power-generating element (this is also called an electrode stack), and housing this power-generating element, together with an electrolytic solution, inside a bag-like exterior body made of a laminate film. In the following description of the embodiment, the battery obtained after the power-generating element is housed inside the film-shaped exterior body is simply referred to as a "cell," irrespective of the manufacturing process.

The step indicated as Step S1 is a step for stacking the electrodes that constitute the power-generating element. Here, the power-generating element in which the plurality of the positive electrodes and the negative electrodes are stacked with separators interposed therebetween, that is, the electrode stack, is formed by sequentially stacking, while cutting into rectangular sheets, the positive electrodes, the negative electrodes, and separators, which are respectively wound into the form of a roll. The positive electrode is obtained by applying a positive electrode active material, as a slurry containing a binder, to both sides of an aluminum foil, which serves as a current collector, which is dried and rolled to form an active material layer having a prescribed thickness. In similar fashion, the negative electrode is obtained by applying a negative electrode active material, as a slurry containing a binder, to both sides of an aluminum foil, which serves as a current collector, which is dried and rolled to form an active material layer having a prescribed thickness. The positive electrode and negative electrode active material layers that are ultimately formed have numerous fine pores, such as gaps between particles. In addition, the separator has the function of holding the electrolytic solution as well as preventing short-circuiting between the positive electrode and the negative electrode, and is made of a nonwoven fabric or a microporous film of synthetic resin, such as polyethylene (PE) or polypropylene (PP).

A prescribed number of these positive electrodes, negative electrodes, and separators are stacked and fixed with a tape to constitute the power-generating element, that is, the electrode stack. The ends of the current collectors of the plurality of the positive electrodes are overlapped with each other, and a positive electrode tab, which serves as a terminal, is ultrasonically welded. In similar fashion the ends of the current collectors of the plurality of the negative electrodes are overlapped with each other, and a negative electrode tab, which serves as a terminal, is ultrasonically welded.

The power-generating element configured in this manner is disposed inside a flexible film-shaped exterior body in the subsequent exterior step indicated as Step S2. For example, the exterior body is made of a laminate film having a three-layer structure made by laminating a synthetic resin thermal adhesive layer on the inner side of an aluminum foil and a synthetic resin protective layer on the outer side of the aluminum foil. According to one example the exterior body has a two-sheet structure composed of a laminate film disposed on the lower surface of the power-generating element and a laminate film disposed on the upper surface of the power-generating element and, with the power-generating element disposed between these two sheets of laminate film, the four peripheral sides are overlapped, leaving an injection port open on one side, and thermally fused to each other. Accordingly, the exterior body is configured in the form of a bag with an open injection port.

According to another example, one sheet of a relatively large laminate film is folded in two, and the power-generating element is sandwiched between the two pieces to form the exterior body. In this case, three sides are thermally fused while leaving an injection port on one side.

The positive electrode tab and the negative electrode tab are positioned on the sides facing the side direction when the one side with the injection port facing upward, and are drawn out to the outside from the joining surface of the laminate film.

The cell that is configured in a state in which the power-generating element is housed inside the film-shaped exterior body in the exterior step is subsequently transported to an injection step, indicated as Step S3. In the injection step, for example, the cell is placed upright in a decompression chamber, and an injection nozzle of a dispenser is inserted into the injection port of the exterior body at a prescribed reduced pressure, to carry out the filling (injection) of the electrolytic solution. This injection is carried out in parts a certain number of times (for example, about seven times), each with a prescribed amount, over certain time intervals. That is, the interior of the exterior body (including the interior of the power-generating element) is brought to a decompressed state so as to remove the remaining air, and the injection is carried out gradually, multiple times, with sufficient time intervals therebetween, to thereby achieve an effective gas-liquid replacement.

When the injection is completed, with the orientation of the cell maintained, in a sealing step (Step S4), the injection port is sealed by using thermal fusion. The seal here is a so-called temporary seal; the injection port (or the vicinity thereof) is opened after charging, described further below, in order to release the gas generated by the charging, and a final seal is formed after degassing.

After the sealing step of Step S4, the cell is removed from the decompression chamber with a robotic hand, or the like, and loaded into the pressurization magazine, in a magazine loading step, indicated as Step S5. A plurality of cells are housed in one pressurization magazine, stacked along the thickness direction of the cells.

Then, in the subsequent pumping step, indicated as Step S6, pressurization and pressure release, in which a pressurization mechanism of the pressurization magazine is used to pressurize the power-generating element inside the exterior body along the thickness direction from outside of the cells and then to release the pressure is successively carried out a plurality of times. This pumping step and the pressurization magazine will be described in detail below.

After the pumping step has been completed, with the cells still housed in the pressurization magazine, an impregnation step, indicated as Step S7, is carried out. Here, the cells are left to stand for a prescribed period (for example, several hours to several tens of hours) in order to allow sufficient time for the penetration of the electrolytic solution into the power-generating element. Because penetration into the active material is promoted by the pumping step, the treatment period for the impregnation step is set to be relatively short, compared to the case in which the pumping step is excluded.

After the impregnation step (Step S7), initial charging is carried out in Step S8. This initial charging is also carried out in the pressurization magazine with the cells appropriately pressurized along the thickness direction, in order to ensure fixed gaps between the electrodes in the power-generating element, which includes the plurality of the positive electrodes and negative electrodes.

After the initial charging step (Step S8) is completed, the cells are removed from the pressurization magazine with the robotic hand, or the like, and put into an ordinary magazine that is not equipped with the pressurization mechanism (Step S9). Then, the process proceeds to the subsequent steps, such as an aging step, which is not shown.

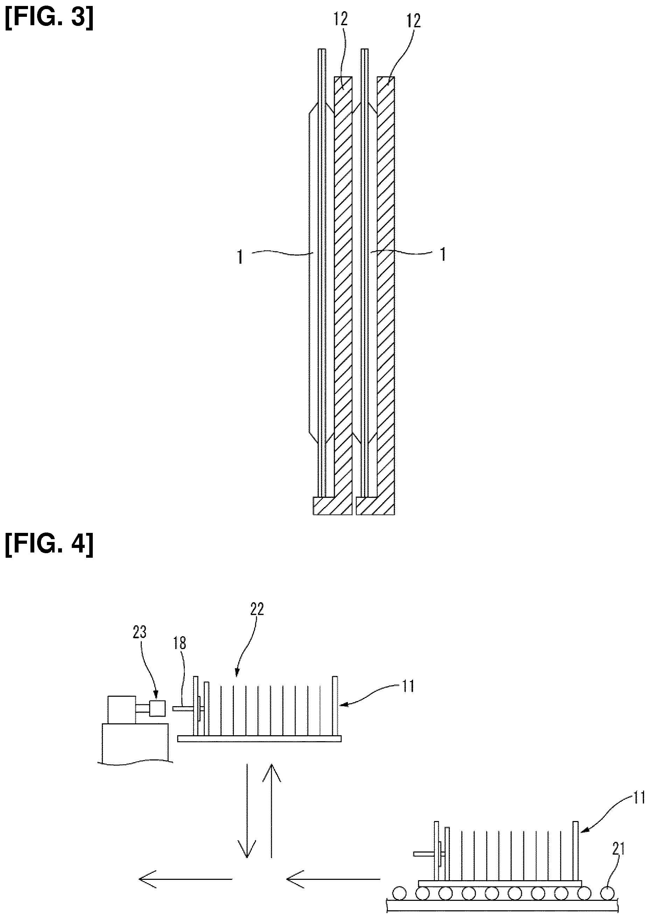

Figures 2 and 3 illustrate one example of the pressurization magazine. The pressurization magazine 11 comprises a base plate 13, which has the form of a flat, rectangular plate that can be conveyed by a conveyor, and a pair of fixed plates 14, 15, which stand upright at both the front and rear ends of the base plate 13, with a plurality of spacers 12 disposed between the fixing plates 14, 15 at essentially equal intervals. The fixing plates 14, 15 receive the entire load when the plurality of the cells are pressurized, and are thus relatively thick and firmly fixed to the base plate 13.

Guide shafts 16 that are bridged between the two fixing plates 14, 15 are fixed to the four corners of the fixing plates 14, 15, and each of the spacers 12 is supported by the four guide shafts 16 so as to be slidable in the thickness direction. The spacers 12 are rigid rectangular plates made of metal, or the like, and the both surfaces that come into contact with the cells 1 are flat. After the injection is completed, each of the cells 1 are loaded between two adjacent spacers 12, as illustrated in Figure 3. In addition, a relatively thick pressurization plate 17, which is also supported by the guide shafts 16 so as to be slidable, is disposed at an end portion of the array of the plurality of spacers 12; the pressurization plate 17 opposes one of the fixing plates, 14.

The pressurization magazine 11 is equipped with a screw-type pressurization mechanism, wherein a threaded screw rod 18 is screwed into a threaded hole 19 of the fixing plate 14, and the distal end of the screw rod 18 is rotatably connected to the pressurizing plate 17.

Thus, by tightening the screw rod 18, the pressurization plate 17 moves along the guide shafts 16, and the plurality of the cells 1 housed between the spacers 12 are simultaneously pressurized.

The above-mentioned pumping step after injection is carried out using the above-described pressurization magazine 11 as described above. Specifically, as is illustrated in Figure 4, the pressurization magazine 11 loaded with the cells 1 by using the robotic hand, or the like, is conveyed to a pumping stage 22 equipped with a nutrunner 23, using a conveyor 21 such as a roller conveyor, and a lift mechanism, which is not shown. Then, forward rotation and reverse rotation of the screw rod 18 is repeatedly carried out with the nutrunner 23 in the pumping stage 22, to thereby repeat pressurization and pressure release along the thickness direction of the cells 1.

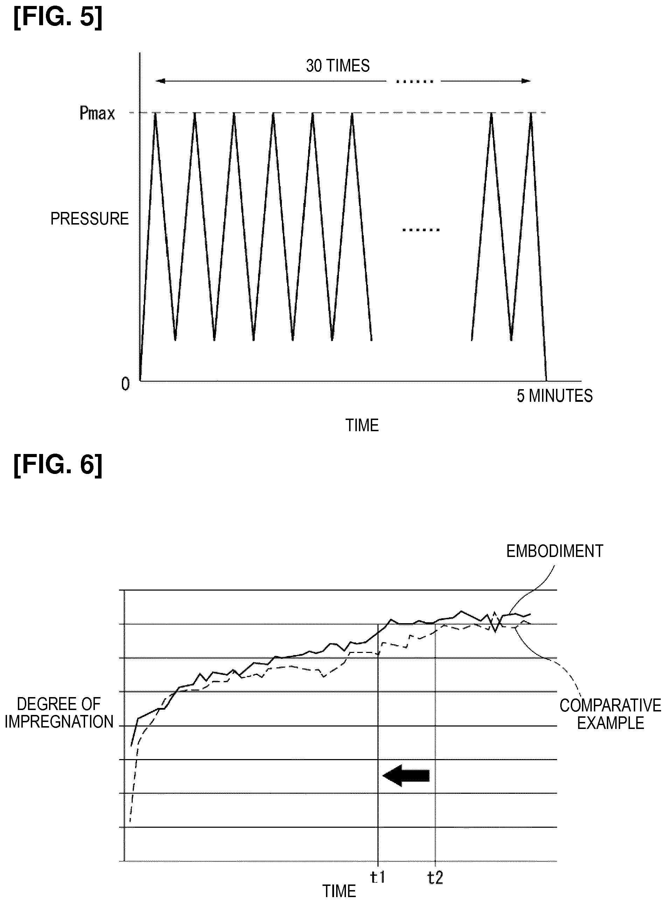

Figure 5 is a characteristic diagram showing an example of a pressure change profile of the cells 1 in the pumping step. In this example, pressurization to a prescribed maximum pressure Pmax and pressure release are repeated successively at a rate of six times per minute for five minutes, for a total of thirty times. In other words, the step includes thirty pressurizations and thirty releases of pressure. The maximum pressure Pmax is, for example, 0.5 kgf/cm². The pressurization and pressure release repetition rate is preferably at least five times per minute, and it is preferable to carry out pressurization and pressure release for at least ten times (for example, a total of 10 times in two minutes). Additionally, as is illustrated in Figure 5, it is preferable to carry out the pressurization and pressure release successively, uninterrupted by intervals.

By adding the pumping step after the electrolytic solution is injected in this manner, penetration of the electrolytic solution into the fine pores of the active material progresses. That is, the power-generating element inside the exterior body, and the active material layers of the positive electrodes and the negative electrodes are pressed in the thickness direction when pressure is applied to the cell 1 held between the two spacers 12 in the thickness direction. The pores inside the active material are thereby crushed, and air remaining in the pores is expelled. Then, with the pressure release following the pressurization, the active material layers that are pressed in the thickness direction are abruptly released, and the crushed pores attempt to recover their shape. Accordingly, a negative pressure is generated within the pores, and the surrounding electrolytic solution is drawn into the pores. Thus, by successively carrying out pressurization/ pressure release a plurality of times, penetration of the electrolytic solution into the active material proceeds rapidly, and it is possible to reduce the time required for the impregnation step. In other words, the gas-liquid replacement is effectively achieved in the fine pores as a result of the pumping step.

Figure 6 is a characteristic diagram illustrating the time required for impregnation in a case in which the pumping step is added, as described above, compared with a comparative example in which the pumping step is not added. The horizontal axis is the time elapsed after the injection is completed and the injection port is sealed. The degree of impregnation represented on the vertical axis is the degree of penetration of the electrolytic solution into the active material, calculated from the change in the impedance of the cells 1. Impregnation progresses with time in both the embodiment and the comparative example, but the electrically determined degree of impregnation saturates at a certain point in time, and thus impregnation of the electrolytic solution with time was deemed to have been completed at this point. In the comparative example, impregnation ends at time t2. In contrast, in the embodiment provided with the pumping step, impregnation ended at an earlier time t1. If time t2 is considered to be "100(%)," time t1 is approximately 80%; accordingly, the experiment resulted in a reduction of the impregnation time by about 20% due to the pumping step.

As in the above-described embodiment, by executing the pumping step using the pressurization magazine 11, it is possible to simultaneously treat numerous cells 1, and it becomes easy to reduce the cycle time compared to a case in which pressurization and pressure release is individually carried out. In addition, because the cell 1 is pressurized by two parallel spacers 12 having a size that can contain the power-generating element, the power-generating element and the active material layers are uniformly pressurized over the entire surface, and impregnation is reliably promoted over the entire surface of the active material layers.

Furthermore, as in the example of Figure 1, when the pumping step (Step S6), the impregnation step (Step S7), and the initial charging step (Step S8) are carried out while the cells 1 are kept housed in the same pressurization magazine 11, there is no substantial increase in the cycle time due to the loading (Step S5) of the pressurization magazine 11 accompanying the addition of the pumping step; thus, it is possible to efficiently carry out the pumping step and the initial charging step by using the same pressurization magazine 11.

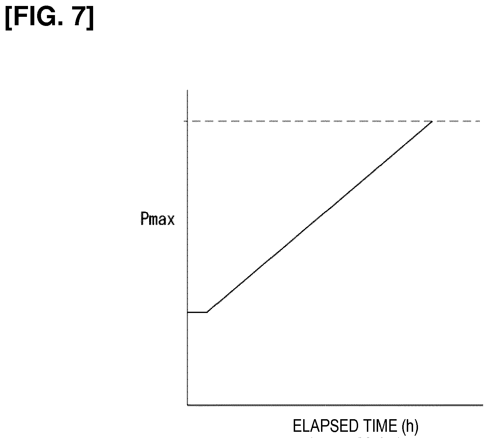

As in the example of Figure 1, it is effective to carry out the pumping step immediately after the injection port is sealed prior to the impregnation step (Step S7), but it is also possible to carry out the pumping step in the middle of the impregnation step, that is, after a certain amount of time has elapsed after injection. In this case, in order to achieve the impregnation promoting effect of the pressurization and pressure release, it is preferable to set a higher maximum pressure Pmax at the time of pressurization. Figure 7 illustrates the correlation between the preferable maximum pressure Pmax and the time elapsed from the completion of injection (horizontal axis). For example, the above-mentioned pressure of about 0.5 kgf/cm² is optimal immediately after the injection is completed, but a pressure of about 1.7 kg f/cm² is optimal after two hours have elapsed after the completion of injection.

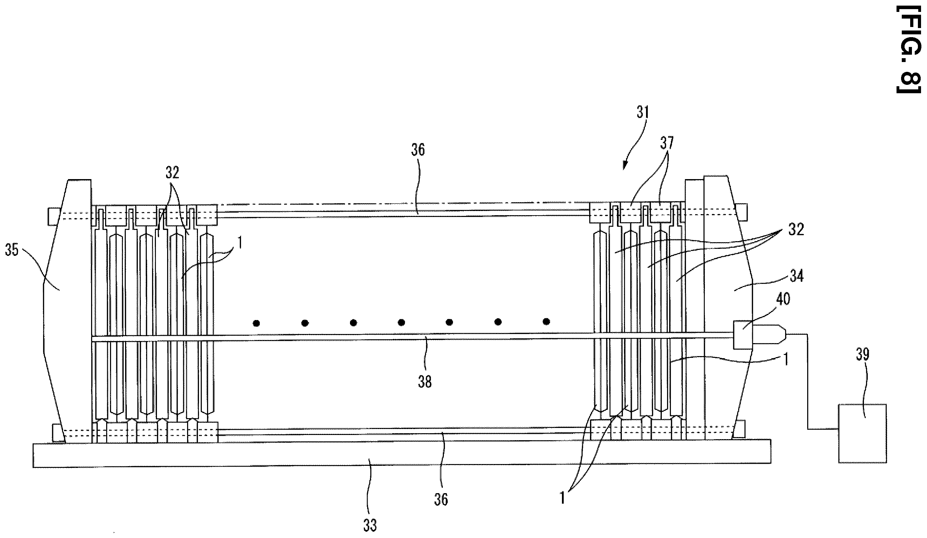

Figure 8 shows a different example of the pressurization magazine that is used in the pumping step. A pressurization magazine 31 shown in Figure 8 is provided with a fluid bag-type pressurization mechanism, comprising a base plate 33 in the form of a flat, rectangular plate, and a pair of fixing plates 34, 35, which stand upright at both the front and rear ends of the base plate 33, with a plurality of bag-like spacers 32 disposed between the fixing plates 34, 35 at essentially equal intervals. The fixing plates 34, 35 receive the entire load when the plurality of the cells are pressurized, and thus are relatively thick and firmly fixed to the base plate 33.

Guide shafts 36 that are bridged between the two fixing plates 34, 35 are fixed to the four corners of the fixing plates 34, 35, and each of the spacers 32 is supported to be slidable in the thickness direction by the four guide shafts 36. Cylindrical bushes 37 are inserted between the spacers 32 on the guide shafts 36 so as to make the pitch between adjacent spacers 32 constant.

The spacers 32 have the form of a bag that expands in the thickness direction of the cells 1 in accordance with the air pressure, which serves as the working fluid sealed therein, and each is connected to an air device 39 that is capable of adjusting the air pressure via an air pipe 38 that extends parallel to the guide shafts 36. The air device 39 is provided on the pumping stage (refer to Figure 4) that executes the pumping step and is detachably connected to the air pipe 38 via a joint 40. More specifically, the spacers 32 are formed into the shape of a bag by the joining of the peripheral edge portions of two flexible sheet-shaped members, and the peripheral edge portions are supported by a rigid, rectangular frame. In addition, the rectangular surface of the sheet-shaped member that constitutes the region that comes into contact with the cell 1 is formed to have relatively high rigidity.

In the above-described pressurization magazine 31, the cells 1 are loaded between the spacers 32 in a state in which the bag-like spacers 32 are contracted. Then, it is possible to achieve the same pumping as Figure 5 described above, by repeating the supply of pressurized air to the bag-like spacer 32 and releasing of the pressure by using a valve mechanism and a pump mechanism of the air device 39 in the pumping stage.

The pressurization magazine 31 can also be similarly used in the initial charging step of Step S8.

Another gas besides air or a liquid may be used as the fluid to expand the spacer 32.

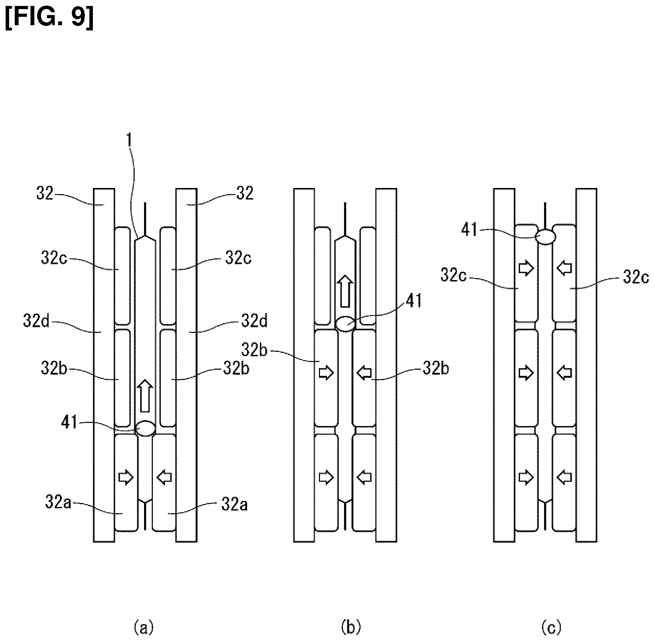

Figure 9 shows a modified example of the fluid bag-type pressurization magazine 31 illustrated in Figure 8. In this embodiment, the spacers 32 that are supported by the guide shafts 36 are configured into a division of three air bags 32a, 32b, 32c, where the air bags 32a, 32b, 32c are supported by rigid frames 32d. The first air bag 32a corresponds to a lower portion of the cell 1 that is loaded in a vertical position, the second air bag 32b corresponds to an intermediate portion of the cell 1, and the third air bag 32c corresponds to an upper portion of the cell 1. The three air bags 32a, 32b, 32c are connected to the air device via individual air pipes (not shown), and can be individually expanded and contracted.

According to this embodiment, by applying pressure successively from the lower portion of the cell 1 during pressurization in the above-described pumping step, it is possible to collect air bubbles in the upper portion of the cell 1 as impregnation is promoted. That is, (a) during the first stage, the first air bag 32a expands, (b) during the second stage, the second air bag 32b expands, and (c) during the third stage, the third air bag 32c expands, as is illustrated in Figure 9. The air bubbles 41 inside the cell 1, schematically shown in the drawing, will collect in the upper portion of the exterior body. Air bubbles 41 tend to remain in the central portion of the cell 1 at the time of injection, and these remaining air bubbles 41 tend to delay the impregnation of the electrolytic solution into the central portion of the cell 1; however, in this embodiment, the air bubbles 41 in the exterior body are forcibly pushed upward, thereby suppressing the delay in the impregnation in the central portion of the cell 1. These air bubbles are expelled in a subsequent gas discharge step, together with the gas that was generated during the initial charging.

## Claims

1. A method for manufacturing a flat film-covered battery having a power-generating element formed by stacking a plurality of positive electrodes and negative electrodes with separators interposed therebetween that is housed together with an electrolytic solution in a flexible film-shaped exterior body, comprising:
an injection step for filling a film-shaped exterior body, which has the form of a bag with an open injection port and which houses the power-generating element, with the electrolytic solution via the injection port;
a sealing step for sealing the injection port after filling with the electrolytic solution; and
a pumping step for successively carrying out pressurization and pressure release in which the power-generating element is subjected to pressurization and then pressure release from outside of the film-shaped exterior body along the thickness direction a plurality of times after sealing.

2. The method for manufacturing a film-covered battery according to claim 1, wherein the pumping step is carried out using a pressurization magazine that is capable of simultaneously pressurizing a plurality of film-covered batteries that are housed in a stacked state with spacers interposed therebetween.

3. The method for manufacturing a film-covered battery according to claim 2, wherein the pressurization magazine is equipped with a screw-type pressurization mechanism, and the pumping step includes repeating a forward rotation and a reverse rotation of a fastening screw rod by using a nutrunner.

4. The method for manufacturing a film-covered battery according to claim 2, wherein the pressurization magazine is equipped with a fluid bag-type pressurization mechanism in which bag-like spacers are expanded by using fluid pressure, and the pumping step includes repeating expansion and contraction of the bag-like spacers.

5. The method for manufacturing a film-covered battery according to any one of claims 1 to 4, wherein the pumping step includes successively performing the pressurization and the pressure release at least ten times.

6. The method for manufacturing a film-covered battery according to any one of claims 1 to 5, wherein the pumping step includes successively performing the pressurization and the pressure release at a rate of at least five time per minute.

7. The method for manufacturing a film-covered battery according to any one of claims 1 to 6, wherein the pumping step is carried out before an impregnation step for a prescribed period of time to allow the electrolytic solution to penetrate into the power-generating element.

8. The method for manufacturing a film-covered battery according to any one of claims 2 to 4, further comprising an initial charging step for carrying out an initial charging of the film-covered battery after impregnation of the electrolytic solution, and
in this initial charging step, the initial charging is carried out in a state in which the film-covered battery is housed in the pressurization magazine used in the pumping step.
